# EUROPÄISCHE PATENTSCHRIFT

(11) **EP 0 908 742 B1**
(45) Veröffentlichungstag und Bekanntmachung des Hinweises auf die Patenterteilung: **04.12.2002**
(21) Anmeldenummer: 98114985.9
(22) Anmeldetag: 11.08.1998
(51) Int. Cl.: G01S 13/60, G01S 13/58

(54) **Verfahren zur Spektralanalyse von Dopplersignalen**
Method for spectral analysis of doppler signal
Procédé d'analyse spectrale d'un signal doppler

(30) Priorität: 13.08.1997 DE 19735160
(43) Veröffentlichungstag der Anmeldung: 14.04.1999
(73) Patentinhaber: SIEMENS AKTIENGESELLSCHAFT, 80333 München (DE)
(72) Erfinder: Schubert, Richard, Dr., 10961 Berlin (DE)

(56) Entgegenhaltungen:
- EP-A- 0 534 056
- WO-A-96/01435
- DE-A- 19 637 009
- US-A- 4 319 245

## Beschreibung

Zur berührungslosen, bordseitigen Geschwindigkeits- und Wegmessung in Landfahrzeugen werden Radarsensoren auf der Grundlage von Ultraschall und Mikrowellen eingesetzt. Die Geschwindigkeit wird aus der Dopplerverschiebung eines schräg auf den Boden gerichteten Strahlenbündels ermittelt. Der zurückgelegte Weg kann durch zeitliche Integration der Geschwindigkeit berechnet werden.

Auf Grund einer Veränderung der Reflexionseigenschaften des Untergrundes kann es zu einer erheblichen Verfälschung der Meßergebnisse kommen. Besonders im unteren Geschwindigkeitsbereich ergibt sich durch die Bodenunebenheiten und die dadurch bedingte diffuse Reflexion ein statistisch schwankender Meßfehler. Außerdem besteht eine starke Abhängigkeit des Meßwertes vom Abstrahlwinkel, der sich auch nach der Montage der zur Abstrahlung vorgesehenen Antenne durch Kippbewegungen des Fahrzeuges während der Fahrt ändern kann.

Um möglichst unabhängig von der Struktur des Untergrundes zu sein, strahlt man vorzugsweise ein sehr schmales Mikrowellenbündel (stark gebündelte Abstrahlkeule) möglichst flach so ab, daß der Winkel zwischen der hauptsächlichen Abstrahlrichtung und der Bewegungsrichtung des Fahrzeuges möglichst gering ist. Bei herkömmlicher Signalauswertung tritt aber auch bei flacher Abstrahlung noch eine merkliche Variation des Meßergebnisses bei einer Veränderung der Beschaffenheit des Untergrundes auf. Zur Kompensation des Einflusses von Kippbewegungen des Fahrzeuges ist der Einsatz von zwei Mikrowellenkeulen vorgeschlagen worden, von denen die eine in Fahrtrichtung und die andere entgegen der Fahrtrichtung gerichtet ist. Der Mittelwert der beiden erhaltenen Geschwindigkeitswerte ist näherungsweise unabhängig von Kippbewegungen.

Aus der EP 0 309 336 B1 war ein Frequenzmeßgerät bekannt, bei dem eine Recheneinheit mit einem einzigen Koeffizienten a eine lineare Regression der linearen Beziehung zwischen den von der Einrichtung zur Abtastung und Umsetzung gelieferten aufeinander folgenden digitalisierten Abtastproben vornimmt.

Aus der DE 41 40 981 A1 war ein Verfahren zur Charakterisierung eines überflogenen Geländes mittels eines Signals einer FM/CW-Sonde bekannt, bei dem die Steilheit der Vorderflanke des Frequenzspektrums eines von dieser Sonde erzeugten Schwebungssignals als Identifikationsmerkmal des Spektrums und damit zum Wiedererkennen eines vorbestimmten Geländetyps herangezogen wird.

Aus EP-A 0 534 056 ist ein Verfahren zur Bestimmung einer Geschwindigkeit mittels mindestens eines Dopplerradarsensors bekannt, bei dem ein gemessenes Leistungs-Dichtespektrum mit verschiedenen Referenz-Leistungs-Dichtespektren verglichen wird, und die Geschwindigkeit aus demjenigen Referenz-Leistungs-Dichtespektrum als innere Variable bestimmt wird, welches die geringste Abweichung zum gemessenen Spektrum aufweist.

Aufgabe der vorliegenden Erfindung ist es, ein Verfahren anzugeben, mit dem eine zuverlässige Geschwindigkeitsmessung bei Landfahrzeugen mittels eines Dopplerradarsensors möglich ist.

Diese Aufgabe wird mit dem Verfahren mit den Merkmalen des Anspruches 1 gelöst. Ausgestaltungen ergeben sich aus den abhängigen Ansprüchen.

Bei dem erfindungsgemäßen Verfahren wird ausgenutzt, daß die Dopplerfrequenz proportional zum Kosinus des Winkels zwischen der Abstrahlrichtung und der Fahrtrichtung ist, so daß sich im Dopplerspektrum eine maximale theoretische Frequenz ergibt, die invariant gegenüber Änderungen des erfaßten Untergrundes und gegenüber Veränderungen der Abstrahlrichtung ist. Die Darstellung des Spektrums als Kurve in einem Diagramm aus über einer Frequenzachse aufgetragenen Intensitätswerten, Amplituden oder im Prinzip beliebigen elektrischen Größen, die aus einer elektronischen Fouriertransformation von Meßsignalen in das Frequenzspektrum hervorgehen, wird im folgenden als Frequenzkurve bezeichnet. Diese Frequenzkurve wird z. B. ausgehend von höheren Frequenzen zu niedrigeren Frequenzen hin abgesucht und ein Maximum, das gewissen Vorgaben genügt, oder ein signifikanter Anstieg der Frequenzkurve wird ausgewählt. Für die Höhe des Maximums oder des Anstieges kann eine untere Grenze vorgegeben sein, oder ein in Frage kommender Maximalwert wird durch die relative Größe in bezug auf benachbarte Frequenzamplituden oder in bezug auf den sich aus dem Grundrauschen ergebenden Anteil des Frequenzspektrums festgelegt. Es wird dann im Bereich dieses Anstiegs oder Maximums an eine steile Flanke der Frequenzkurve (in der Regel eine Flanke, die zu höheren Frequenzen hin abfällt) eine geeignete Kurve angepaßt. Es kann zu diesem Zweck im einfachsten Fall eine Gerade gewählt werden. Die Kurve wird z. B. so angepaßt, daß sie zwei Punkte mit dem Graphen der Frequenzkurve gemeinsam hat. Alternativ kann die Kurve mittels eines Verfahrens der (z. B. linearen) Regression angepaßt werden. Es wird dann die Nullstelle dieser Funktion, die an die Frequenzkurve angepaßt wird, bestimmt, d. h. es wird diejenige Frequenz bestimmt, bei der der Funktionswert null ist. Da die Funktion in einem Frequenzbereich an die Frequenzkurve angepaßt wird, in dem die Frequenzkurve besonders steil verläuft, kann die Nullstelle dieser angepaßten Funktion als zu dem Frequenzspektrum gehörende gesuchte maximale Frequenz angesehen werden, die als Dopplerfrequenz für die Bestimmung der Geschwindigkeit in Fahrtrichtung herangezogen werden kann.

Es folgt eine genauere Erläuterung des erfindungsgemäßen Verfahrens anhand der Figuren 1 bis 4.
Figur 1 zeigt ein typisches Frequenzspektrum, auf das das erfindungsgemäße Verfahren anwendbar ist.
Figur 2 zeigt eine schematisierte Darstellung des Diagramms von Figur 1 mit Frequenzspektren in unterschiedlichen Maßstäben der Frequenzachse.
Figur 3 zeigt eine schematisierte Darstellung des Diagramms von Figur 1 mit mehreren typischen Frequenzkurven.
Figur 4 zeigt eine Prinzipskizze für eine Anordnung, mit der Frequenzspektren nach Art des Diagramms der Figur 2 aufgenommen werden können.

Das erfindungsgemäße Verfahren wird bei Spektren angewendet, bei denen der auf einer Seite eines interessierenden Frequenzwertes liegende Bereich gering verrauscht ist und die Flanke der Frequenzkurve, die von dieser Seite her im Bereich um die gesuchte Frequenz ansteigt, ziemlich gerade und ziemlich steil verläuft. An diese Flanke wird eine Kurve angepaßt, die als Funktion der Frequenz definiert wird.

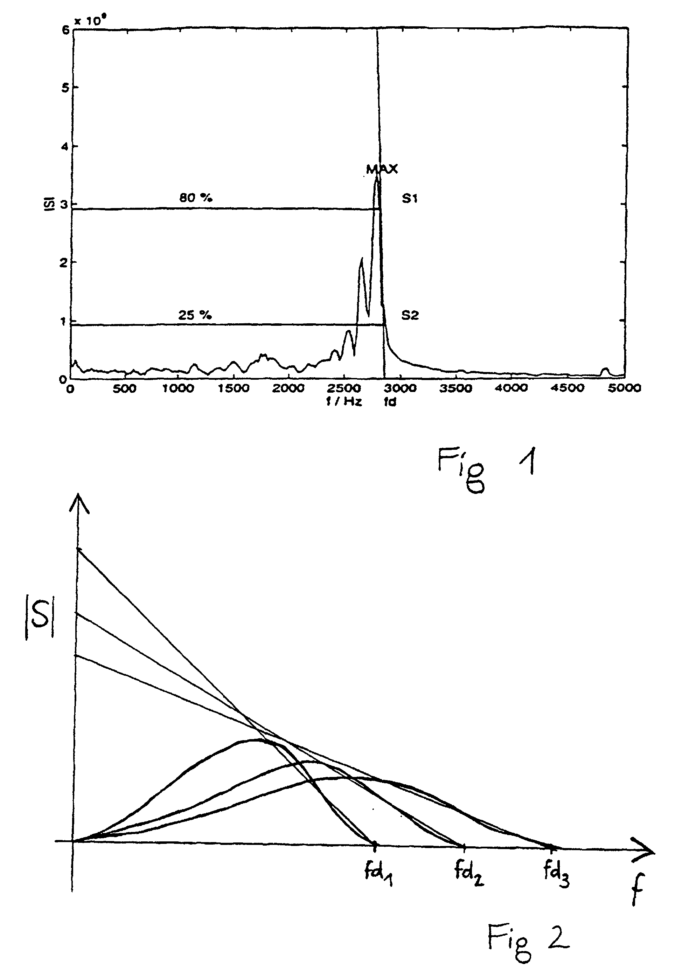

In dem als Beispiel angegebenen Diagramm der Figur 1 ist auf der Abszissenachse die Frequenz f in der Einheit Hz aufgetragen und auf der Ordinatenachse die Größe der Frequenzamplituden in einer geeignet gewählten Einheit. Ein Maximum liegt bei ungefähr 2800 Hz. Vorzugsweise wird ein derartiges Spektrum mit bekannten Methoden geglättet. Unterhalb des Maximums, d. h. im Bereich von 0 Hz bis 2800 Hz ist das Spektrum stark verrauscht. In einem bevorzugten einfachen Beispiel wird entsprechend dem Diagramm der Figur 1 an die zu höheren Frequenzen hin abfallende Flanke (Kante) der Frequenzkurve eine Gerade angepaßt. Diese Gerade wird so an die Frequenzkurve angepaßt, daß eine möglichst große Übereinstimmung im Bereich der betreffenden Flanke erreicht wird. Bei einer einfachen Ausgestaltung des Verfahrens wird dafür gesorgt, daß die angepaßte Kurve oder Gerade zwei Punkte mit der Frequenzkurve gemeinsam hat. D. h., es existieren zwei verschiedene Frequenzen im Bereich der Flanke, bei denen der Wert der angepaßten Funktion mit dem Wert der Frequenzkurve (Amplituden der betreffenden Frequenzen) übereinstimmt. Zur Anpassung der Geraden kann statt dessen eines der üblichen Verfahren zur Anpassung einer Geraden an eine Kurve (lineare Regression) verwendet werden. Dabei wird z. B. die Summe der Quadrate der Abweichungen der Funktionswerte von den Werten der Frequenzkurve minimiert.

In dem in Figur 1 gezeigten Diagramm ist eine Gerade an die rechte Flanke der Frequenzkurve derart angepaßt, daß die Gerade zwischen den Punkten S1 (bei 80% des Maximalwertes) und S2 (bei 25% des Maximalwertes) die Frequenzkurve bestmöglich approximiert. Wie beschrieben ist alternativ eine Approximation durch geradliniges Verbinden von S1 und S2 oder reine lineare Regression der Flanke möglich. Die Nullstelle der Geraden und damit die dem Frequenzspektrum zugehörige Frequenz ist durch den Schnittpunkt der Geraden mit der Abszissenachse, in Figur 1 mit fd bezeichnet, gegeben.

Bei einer Änderung des Maßstabes der Frequenzachse, wie sie bei Doppler-Radarsystemen auftritt, wenn unterschiedliche Geschwindigkeiten gemessen werden, bleibt die Fläche unter der Frequenzkurve im Spektrum im wesentlichen erhalten, wie das in Figur 2 im Schema dargestellt ist. Der Maßstab auf der Ordinatenachse und damit die Höhe eines Maximums der Frequenzkurve ändert sich dabei umgekehrt proportional zu dieser Änderung des Maßstabes der Frequenzachse. Das Maximum wandert daher auf einer Hyperbel in dem Diagramm. Eine an die Flanke der Frequenzkurve angepaßte Gerade unterliegt somit der Nebenbedingung, daß das Produkt der Abschnitte auf den beiden Achsen des Diagrammes zwischen dem Ursprung 0 des Koordinatensystems und den Schnittpunkten mit der Geraden konstant bleibt. Daher kann ausgehend von einer zur Normierung verwendeten Geschwindigkeit und einer zugehörigen angepaßten Geraden leicht eine Gerade gefunden werden, die an die Flanke eines zu einer anderen Geschwindigkeit gehörenden Spektrums angepaßt ist. Das ermöglicht auch eine fortlaufende (dynamische) Korrektur eines zur Anpassung verwendeten Algorithmus während des Meßvorganges, indem die Güte der Anpassung der zu verschiedenen Geschwindigkeiten an die Frequenzkurve angepaßten Geraden miteinander verglichen werden.

Statt einer Geraden kann eine andere Kurve an die Frequenzkurve angepaßt werden. Es ist dabei nur erforderlich, daß die Nullstelle dieser angepaßten Kurve möglichst genau die Grenze zu dem nur aus Grundrauschen bestehenden Anteil des Frequenzspektrums markiert. Der steile Verlauf der Flanke muß daher durch die angepaßte Kurve möglichst parallel zur Ordinatenachse fortgesetzt werden. Bei einem Dopplerradar kann davon ausgegangen werden, daß im Bereich oberhalb der Frequenz eines signifikanten Maximalwertes keine wesentlichen Maxima mehr auftreten und das Grundrauschen des Spektrums relativ gering ist. Bei einem derartigen Spektrum wird vorzugsweise ausgehend von einer vorgegebenen hohen Frequenz, die oberhalb der für signifikante Maximalwerte zu erwartenden Frequenz liegt, in Richtung hin zu niedrigeren Frequenzen das Frequenzspektrum abgesucht. Wird dabei ein Maximum oder ein Ansteigen der Frequenzkurve festgestellt, das die vorgegebenen Eigenschaften in bezug auf die absolute Größe des erreichten Maximalwertes oder eine relative Größe im Vergleich zu anderen Maximalwerten oder dem Grundrauschen besitzt, wird auf die zu höheren Frequenzen hin abfallende Flanke das erfindungsgemäße Verfahren angewendet. Ggf. kann eine Normierung der Amplitudenwerte erforderlich sein.

Das Verfahren kann durchgeführt werden, indem eine Mikrowellenkeule flach abgestrahlt wird und mit einer angeschlossenen Signalauswerteeinheit, die z. B. einen Signalprozessor oder Mikrocontroller umfaßt, ein Frequenzspektrum erzeugt wird. Das geschieht in an sich bekannter Weise mittels schneller Fouriertransformation oder einem anderen geeigneten Algorithmus. Es genügt, wenn nur der für die erfindungsgemäße Analyse erforderliche Teil des Frequenzspektrums erzeugt wird. Bei einfacheren Anwendungen wird die im Spektrum vorhandene maximale relevante Frequenz (abgesehen von Störungen und Grundrauschen) über analoge Schaltungen ermittelt.

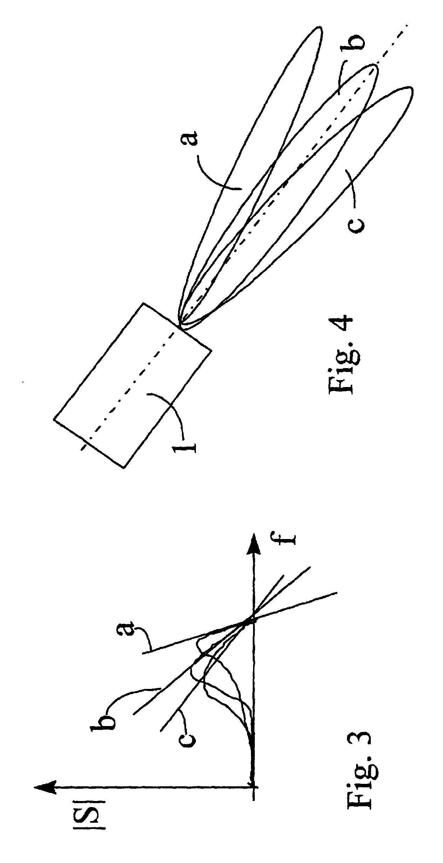

Zur Erhöhung der Genauigkeit der Messung ist der Einsatz von zwei oder mehr Antennen möglich. In Figur 3 ist ein Diagramm dargestellt, in dem drei Frequenzkurven, die mit verschiedenen Abstrahlwinkeln eines Dopplerradarsensors aufgenommen wurden, eingezeichnet sind. Die rechten Flanken dieser Kurven sind jeweils mit einer Geraden a, b, c approximiert. Diese Geraden besitzen in guter Näherung dieselbe Nullstelle, die die für die zu messende Geschwindigkeit maßgebliche Dopplerfrequenz ist. Figur 4 zeigt im Schema eine Anordnung eines Radarsensors 1 mit drei verschiedenen Abstrahlkeulen a, b und c, die in unterschiedlichen Winkeln auf den Untergrund gerichtet werden und die die drei in Figur 3 eingezeichneten Frequenz kurven liefern.

Es kann auch der Abstrahlwinkel kontinuierlich oder in Stufen verändert werden. Dafür stehen die an sich bekannten Verfahren zur Verfügung, wie z. B. ein Schwenken der Abstrahlrichtung durch Schwenken der Antenne oder durch Verschieben der relativen Phasen der von verschiedenen Antennen abgestrahlten Signale. Dabei ist ein Schwenken um eine horizontale Achse oder eine vertikale Achse oder eine geeignete Kombination aus beiden Bewegungsrichtungen möglich. Eine entsprechend den Fahrzeugbewegungen nachgeführte Abstrahlrichtung kann ebenfalls von Vorteil sein.

In der Praxis ist die Kombination einer flachen und einer etwas steileren Abstrahlung besonders vorteilhaft. Das mit der flachen Abstrahlrichtung aufgenommene Frequenzspektrum ist besonders für das erfindungsgemäße Verfahren geeignet, während das andere Meßsignal zur Kontrolle dient. Das erfindungsgemäße Verfahren läßt sich auch ohne definierte Abstrahlrichtung anwenden, also z. B. mit einer rundum abstrahlenden Antenne, da ja die theoretisch maximale Frequenz ermittelt wird und diese Frequenz nur in der Fahrtrichtung erzeugt wird.

Eine kontinuierliche Verschiebung des Dopplerspektrums bei Beschleunigung des Fahrzeuges kann auch dadurch berücksichtigt werden, daß die Abtastfrequenz, mit der die Sensorsignale digitalisiert werden, verändert wird (variables Sampling). Die dafür erforderliche Kenntnis der Geschwindigkeitsänderung kann insbesondere mit einem iterativen Verfahren gewonnen werden, bei dem in einem ersten Schritt ein genäherter Wert für den zeitlichen Geschwindigkeitsverlauf ermittelt wird und dieser Wert in nachfolgenden Iterationen verfeinert wird. Die Näherungen werden vorzugsweise nach einer Fouriertransformation der Dopplersignale vorgenommen.

## Patentansprüche

1. Verfahren zur Spektralanalyse von Dopplersignalen,
- bei dem ein Frequenzspektrum als Funktion von Frequenzen durch eine Frequenzkurve repräsentiert wird,
- bei dem eine Approximationskurve ausgewählt wird, **dadurch gekennzeichnet, dass**
- die Approximationskurve eine Nullstelle aufweist und an eine Flanke der Frequenzkurve angepasst wird und,
eine der Nullstelle entsprechende Frequenz einer maximalen Dopplerfrequenz (fd) gleichgesetzt wird.

2. Verfahren nach Anspruch 1,
bei dem die Flanke der Frequenzkurve bestimmt wird, indem ausgehend von einer vorgegebenen Frequenz in Richtung zu niedrigeren Frequenzen hin ein erster auftretender Maximalwert, der größer als ein vorgegebener absoluter oder relativer Wert ist, oder ein erster auftretender signifikanter Anstieg der Frequenzkurve bestimmt wird.

3. Verfahren nach Anspruch 1 oder 2,
bei dem zur Anpassung an das Frequenzspektrum eine lineare Funktion als Approximationskurve gewählt wird.

4. Verfahren nach Anspruch 3,
bei dem die lineare Funktion so gewählt wird, daß bei zwei Frequenzen, die im Bereich der gewählten Flanke liegen und
bei denen das Frequenzspektrum zwei bestimmte Werte annimmt, die lineare Funktion ebenfalls diese Werte annimmt.

5. Verfahren nach Anspruch 3,
bei dem die lineare Funktion mittels eines Algorithmus zur Anpassung einer Geraden an eine Kurve bestimmt wird.

6. Verfahren nach Anspruch 3,
bei dem die lineare Funktion durch Anwendung eines Verfahrens der linearen Regression auf das Frequenzspektrum im Bereich der Flanke bestimmt wird.

7. Verfahren nach einem der Ansprüche 3 bis 6,
bei dem das Produkt der Nullstelle der linearen Funktion und des Wertes der linearen Funktion für die Frequenz null festgelegt wird.

8. Verfahren nach einem der Ansprüche 1 bis 7,
bei dem eine Normierung des Frequenzspektrums vorgenommen wird, mit der die Werte des Frequenzspektrums an die Größe von Bezugswerten angepaßt werden.

## Claims

1. Method for spectral analysis of Doppler signals,
- in which a frequency spectrum is represented as a function of frequencies by means of a frequency curve,
- in which an approximation curve is selected,
**characterized in that**
- the approximation curve has a zero point and is matched to one flank of the frequency curve, and
a frequency which corresponds to the zero point is equated to a maximum Doppler frequency (fd).

2. Method according to Claim 1,
in which the flank of the frequency curve is determined in that, on the basis of a predetermined frequency, a first maximum value which occurs in the direction of lower frequencies and which is greater than a predetermined absolute or relative value, or a first significant rise that occurs in the frequency curve is determined.

3. Method according to Claim 1 or 2,
in which a linear function is chosen as the approximation curve for matching to the frequency spectrum.

4. Method according to Claim 3,
in which the linear function is chosen such that, in the case of two frequencies which are located in the region of the chosen flank and for which the frequency spectrum assumes two specific values, the linear function likewise assumes these values.

5. Method according to Claim 3,
in which the linear function is determined by means of an algorithm for matching a straight line to a curve.

6. Method according to Claim 3,
in which the linear function is determined by applying a linear regression method to the frequency spectrum in the region of the flank.

7. Method according to one of Claims 3 to 6,
in which the product of the zero point of the linear function and the value of the linear function is defined for the frequency zero.

8. Method according to one of Claims 1 to 7,
in which the frequency spectrum is normalized, and this is used to match the values of the frequency spectrum to the magnitude of the reference values.

## Revendications

1. Procédé d'analyse spectrale d'un signal doppler,
- dans lequel un spectre de fréquences est représenté comme fonction de fréquence par une courbe de fréquence,
- dans lequel une courbe d'approximation est sélectionnée,
**caractérisé en ce que**
- la courbe d'approximation présente un zéro et est ajustée à un flanc de la courbe de fréquence, et
- **en ce qu'**une fréquence correspondant au zéro est égale à une fréquence doppler maximale (fd).

2. Procédé selon la revendication 1,
dans lequel le flanc de la courbe de fréquence est déterminé, du fait que, partant d'une fréquence prédéfinie pour aller vers des fréquences plus basses, une première valeur maximale se produisant, qui est supérieure à une valeur prédéfinie absolue ou relative, ou qu'une première augmentation significative de la courbe de fréquence se produisant est déterminée.

3. Procédé selon la revendication 1 ou 2,
dans lequel une fonction linéaire est sélectionnée comme courbe d'approximation pour l'ajustement au spectre de fréquences.

4. Procédé selon la revendication 3,
dans lequel la fonction linéaire est sélectionnée de telle manière qu'en cas de deux fréquences qui sont situées dans la partie du flanc sélectionné et pour lesquelles le spectre de fréquences atteint deux valeurs déterminées, la fonction linéaire atteint également ces valeurs.

5. Procédé selon la revendication 3,
dans lequel la fonction linéaire est déterminée au moyen d'un algorithme pour l'ajustement d'une droite à une courbe.

6. Procédé selon la revendication 3,
dans lequel la fonction linéaire est déterminée par l'application d'un procédé de la régression linéaire au spectre de fréquences dans la partie du flanc.

7. Procédé selon l'une des revendications 3 à 6,
dans lequel le produit du zéro de la fonction linéaire et de la valeur de la fonction linéaire est fixé à zéro pour la fréquence.

8. Procédé selon l'une des revendications 1 à 7,
dans lequel une normalisation du spectre de fréquences est réalisée, avec laquelle les valeurs du spectre de fréquences sont ajustées à la grandeur de valeurs de référence.
